# EUROPEAN PATENT APPLICATION

(11) **EP 3 249 501 A1**
(43) Date of publication of application: **29.11.2017**
(21) Application number: 15794809.2
(22) Date of filing: 16.04.2015
(51) Int. Cl.: G06F 3/041

(54) **TOUCH SCREEN AND PREPARATION METHOD THEREFOR, AND TOUCH DISPLAY SCREEN**

(30) Priority: 08.01.2015 CN 201510009696
(71) Applicant: BOE Technology Group Co., Ltd., Beijing 100015 (CN); Hefei Xinsheng Optoelectronics Technology Co. Ltd, Anhui 230011 (CN)
(72) Inventor: SHI, Wenjie, Beijing 100176 (CN); HU, Ming, Beijing 100176 (CN); XIE, Taofeng, Beijing 100176 (CN); LUO, Hongqiang, Beijing 100176 (CN)
(74) Representative: Klunker IP Patentanwälte PartG mbB
(86) International application number: PCT/CN2015/076763
(87) International publication number: WO 2016/110020

(57) **Abstract**

A touch screen and a preparation method thereof, and a touch display screen are provided for avoiding the problem of yellowing of a white frame of a prepared touch screen due to high temperature processes. The touch screen includes a light-transmissive region (102) and a frame region (101) surrounding the light-transmissive region (102), a base substrate in the light-transmissive region (102) being provided with a touch functional layer (103), wherein, a base substrate in the frame region (101) is provided with a white light-shielding layer (3), the white light-shielding layer (3) is mixed with a fluorescent agent, and the fluorescent agent is capable of absorbing ultraviolet light and emitting blue light.

## Description

### TECHNICAL FIELD

Embodiments of the present disclosure relate to a touch screen and a preparation method thereof, and a touch display screen.

### BACKGROUND

In a white one-glass-solution (OGS) touch screen, a white light-shielding layer is formed in the frame region of the OGS touch screen by photoetching white photoresist or silk-screen printing white ink, to achieve a white visual effect. During a procedure of preparing the OGS touch screen, a plurality of high temperature processes are needed, for example, the processes for coating ITO and photoetching an organic photoresist material (e.g., an overcoat layer). The white light-shielding layer of the white OGS touch screen, after undergoing the plurality of high temperature processes, may cause yellowing to the white photoresist or an organic resin in the ink, that is, yellowing to the white light-shielding layer in the frame region of the white OGS touch screen, so that the white portion of the frame of the touch display screen is visually yellowish, resulting in a poor product yield.

### SUMMARY

At least one embodiment of the present disclosure provides a touch screen and a preparation method thereof, and a touch display screen for avoiding the problem of yellowing of a white frame of a prepared touch screen due to a plurality of high temperature processes.

At least one embodiment of the present disclosure provides a touch screen, comprising a light-transmissive region and a frame region surrounding the light-transmissive region, a base substrate in the light-transmissive region being provided with a touch functional layer, wherein the base substrate in the frame region is provided with a white light-shielding layer, the white light-shielding layer is mixed with a fluorescent agent, and the fluorescent agent is capable of absorbing ultraviolet light and emitting blue light. In the embodiment of the present disclosure, the fluorescent agent in the white light-shielding layer is added to adjust chromaticity of the white light-shielding layer, the fluorescent agent is capable of absorbing invisible ultraviolet light and then emitting blue visible light, which is complementary to yellow light that is originally reflected by the white light-shielding layer, so as to form white light.

For example, the fluorescent agent is any one of stilbenes fluorescent brightener, coumarin-type fluorescent brightener and naphthalimides fluorescent brightener. In the embodiment of the present disclosure, the fluorescent agent is capable of absorbing invisible ultraviolet light and then emitting blue visible light.

For example, a black light-shielding layer is provided above the white light-shielding layer. In the embodiment of the present disclosure, by providing the black light-shielding layer, an optical density of the touch screen in the frame region is improved.

For example, an optical density value of a composite layer constituted by the white light-shielding layer and the black light-shielding layer is greater than four, and the optical density value is represented by a decimal logarithm of a transmittance. In the embodiment of the present disclosure, the optical density value of a composite layer constituted by the white light-shielding layer and the black light-shielding layer is greater than four, which can ensure a light-shielding performance.

At least one embodiment of the present disclosure provides a touch display screen, comprising the touch screen provided by the above-described embodiment.

At least one embodiment of the present disclosure provides a preparation method of a touch screen, comprising: forming a white light-shielding layer within a frame region of a base substrate, the white light-shielding layer being mixed with a fluorescent agent, the fluorescent agent being capable of absorbing ultraviolet light and emitting blue light; and forming a touch functional layer within a light-transmissive region of the base substrate.

For example, forming of the white light-shielding layer within the frame region of the base substrate, includes: providing a white photoresist, the white photoresist having the fluorescent agent added therein; and forming a white photoresist film on the base substrate by using the white photoresist, and making the white photoresist film form the white light-shielding layer located on the base substrate in the frame region by a photoetching process.

For example, a percentage of mass of the added fluorescent agent to a total mass of the white photoresist and the fluorescent agent is 1‰ to 5‰.

For example, forming of a white light-shielding layer mixed with a fluorescent agent within a frame region of a base substrate, includes: providing white ink, the white ink having the fluorescent agent added therein; and forming the white light-shielding layer on the base substrate in the frame region by a silk-screen printing process, by using the white ink.

For example, a percentage of mass of the added fluorescent agent to a total mass of the white ink and the fluorescent agent is 1‰ to 5‰.

For example, the fluorescent agent is any one of stilbenes fluorescent brightener, coumarin-type fluorescent brightener and naphthalimides fluorescent brightener.

### BRIEF DESCRIPTION OF THE DRAWINGS

In order to clearly illustrate the technical solution of the embodiments of the present disclosure, the drawings of the embodiments will be briefly described in the following; it is obvious that the described drawings are only related to some embodiments of the present disclosure and thus are not limitative of the present disclosure.
FIG. 1A is a schematic diagram of a touch screen provided by an embodiment of the present disclosure;
FIG. 1B is a partial schematic diagram of a frame region of the touch screen provided by the embodiment of the present disclosure;
FIG. 2 is a flow chart of a preparation method of a touch screen provided by an embodiment of the present disclosure;
FIG. 3 is a flow chart of a first type of the preparation method of the touch screen provided by an embodiment of the present disclosure; and
FIG. 4 is a flow chart of a second type of the preparation method of the touch screen provided by an embodiment of the present disclosure.

### DETAILED DESCRIPTION

In order to make objects, technical solutions and advantages of the embodiments of the present disclosure more apparent, the technical solutions of the embodiment will be described in a clearly and fully understandable way in connection with the drawings related to the embodiments of the present disclosure. It is obvious that the described embodiments are just a portion but not all of the embodiments of the present disclosure. Based on the described embodiments of the present disclosure, those ordinarily skilled in the art can obtain other embodiment(s), without any inventive work, which should be within the protective scope of the present disclosure.

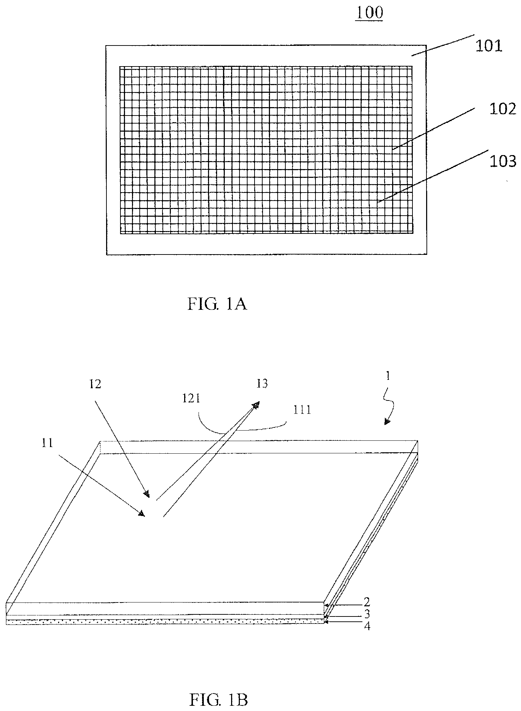

At least one embodiment of the present disclosure provides an OGS touch screen; as shown in FIG. 1A, the OGS touch screen 100 comprises a light-transmissive region 102 and a frame region 101 surrounding the light-transmissive region, and the light-transmissive region 102 is provided with a touch functional layer 103 on a base substrate; the frame region 101 is provided with a white light-shielding layer on the base substrate, the white light-shielding layer is mixed with a fluorescent agent, and the fluorescent agent is capable of absorbing ultraviolet light and emitting blue light. The touch functional layer 103, for example, includes touch driving lines and touch sensing lines intersecting with each other, or includes an array of touch electrode units.

It should be noted that here ultraviolet light covers invisible shortwave light that is contained in ambient light, the white OGS touch screen is used in a normal environment, and the invisible shortwave light exist in both sunlight and light emitted by an ordinary fluorescent lamp. The fluorescent agent will undergo electron energy transition by absorbing the invisible shortwave light, and when energy is released again, visible light relatively longer wave length will be emitted, and the visible light is mainly distributed in the range of blue-violet light. The visible blue light emitted by the fluorescent agent can be mixed with yellow light, to a certain extent, to form white light, and in result the white frame of the OGS touch screen is visually closer to white.

In at least one embodiment of the present disclosure, for example, the fluorescent agent is any one of stilbenes fluorescent brightener, coumarin-type fluorescent brightener and naphthalimides fluorescent brightener. With stilbenes fluorescent brightener as an example, 1,4-bis(o-cyano styryl)benzene, 1,4-bis(p-cyano styryl)benzene, or (1-o-cyano styryl, 4-p-cyano styryl)benzene can be selected for use. The fluorescent agent is capable of absorbing invisible ultraviolet light and then emitting blue visible light, and the blue visible light can neutralize yellow light.

In at least one embodiment of the present disclosure, for example, a black light-shielding layer is provided above the white light-shielding layer. With the black light-shielding layer, an optical density of the OGS touch screen in the frame region can be increased.

In at least one embodiment of the present disclosure, for example, an optical density value of the composite layer constituted by the white light-shielding layer and the black light-shielding layer is greater than four, and the optical density value is represented by a decimal logarithm of a transmittance. The optical density value of the composite layer constituted by the white light-shielding layer and the black light-shielding layer is greater than four, which can ensure a light-shielding performance.

In order to illustrate a principle of this embodiment more clearly, FIG. 1B is taken as an example for description. FIG. 1 is a partial schematic diagram of a frame region of an OGS touch screen 1. The OGS touch screen 1, in the frame region, comprises a base substrate 2, a white light-shielding layer 3 and a black light-shielding layer 4; visible light 11 and ultraviolet light 12 are incident into the frame region of the OGS touch screen 1, the incident visible light 11 passes through the white light-shielding layer 3 and then is reflected by the black light-shielding layer 4, to emit out visible light 111, which is yellowish. The incident ultraviolet light 12, after being absorbed by the fluorescent agent (not shown), produces blue visible light 121, which is reflected by the black light-shielding layer 4, and the blue visible light 121 is mixed with the visible light 111, to produce outgoing light 13, which is close to white light.

Advantageous effects of the embodiment of the present disclosure comprises the followings: the fluorescent agent is added in the white light-shielding layer to adjust chromaticity of the white light-shielding layer, the fluorescent agent is capable of absorbing invisible ultraviolet light and then emitting out blue visible light, which is complementary to yellow light that is originally reflected by the white light-shielding layer, so as to form white light, which therefore ameliorates a phenomenon that a white portion of the frame of the OGS touch display screen is visually yellowish and improves a product yield.

At least one embodiment of the present disclosure provides an OGS touch display screen, comprising the OGS touch screen provided by any of the above-described embodiments.

Advantageous effects of the embodiment of the present disclosure comprises the following: the fluorescent agent is added in the white light-shielding layer to adjust chromaticity of the white light-shielding layer, the fluorescent agent is capable of absorbing invisible ultraviolet light and then emitting blue visible light, which is complementary to yellow light that is originally reflected by the white light-shielding layer, so as to form white light, which therefore ameliorates a phenomenon that a white portion of the frame of the OGS touch display screen is visually yellowish and improves a product yield.

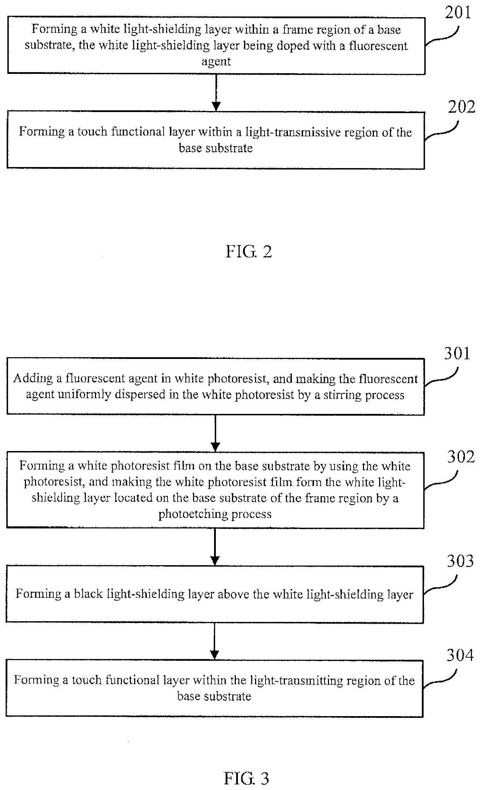

With reference to FIG. 2, at least one embodiment of the present disclosure provides a preparation method of an OGS touch screen, comprising the following steps:
201: forming a white light-shielding layer within a frame region of a base substrate, the white light-shielding layer being mixed with a fluorescent agent, the fluorescent agent being capable of absorbing ultraviolet light and emitting blue light;
202: forming a touch functional layer within a light-transmissive region of the base substrate.

Advantageous effects of the embodiment of the present disclosure are as follows: the fluorescent agent in the white light-shielding layer is added to adjust chromaticity of the white light-shielding layer, the fluorescent agent is capable of absorbing invisible ultraviolet light and then emitting blue visible light, which is complementary to yellow light that is originally reflected by the white light-shielding layer, so as to form white light, which therefore ameliorates a phenomenon that a white portion of the frame of the OGS touch display screen is visually yellowish and improves a product yield.

It should be noted that, the embodiment of the present disclosure may prepare the white light-shielding layer having the fluorescent agent by using different materials and processes, so as to implement preparation of the OGS touch screen, which is illustrated in detail as follows:
With reference to FIG. 3, there is provided specifically a first type of the preparation method of the touch screen, comprising:
   301: adding a fluorescent agent in white photoresist, and making the fluorescent agent uniformly dispersed in the white photoresist by a stirring process. For example, a percentage of mass of the added fluorescent agent to a total mass of the white photoresist and the fluorescent agent is 1‰ to 5‰.

In at least one embodiment of the present disclosure, for example, the fluorescent agent is any one of stilbenes fluorescent brightener, coumarin-type fluorescent brightener and naphthalimides fluorescent brightener.

302: forming a white photoresist film on the base substrate by using the white photoresist, and making the white photoresist film form the white light-shielding layer located on the base substrate in the frame region by a photoetching process.

303: forming a black light-shielding layer above the white light-shielding layer.

In at least one embodiment of the present disclosure, an optical density value of a composite layer constituted by the white light-shielding layer and the black light-shielding layer is greater than four, and the optical density value is represented by a decimal logarithm of a transmittance.

304: forming a touch functional layer within the light-transmissive region of the base substrate.

Advantageous effects of the embodiment of the present disclosure are as follows: by adding the fluorescent agent in the white photoresist and preparing the white light-shielding layer, to adjust chromaticity of the white light-shielding layer, the fluorescent agent is capable of absorbing invisible ultraviolet light and then emitting blue visible light, which is complementary to yellow light that is originally reflected by the white light-shielding layer, so as to form white light, which therefore ameliorates a phenomenon that a white portion of the frame of the touch display screen is visually yellowish and improves a product yield.

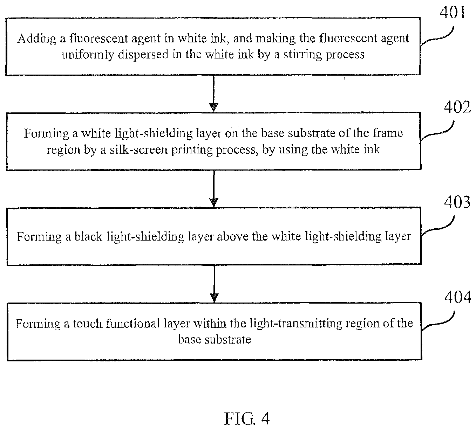

With reference to FIG. 4, there is provided specifically a second type of the preparation method of the touch screen, comprising:
401: adding a fluorescent agent in white ink, and making the fluorescent agent uniformly dispersed in the white ink by a stirring process. For example, a percentage of mass of the added fluorescent agent to a total mass of the white ink and the fluorescent agent is 1‰ to 5‰.

In at least one embodiment of the present disclosure, for example, the fluorescent agent is any one of stilbenes fluorescent brightener, coumarin-type fluorescent brightener and naphthalimides fluorescent brightener.

402: forming a white light-shielding layer on the base substrate in the frame region by a silk-screen printing process, by using the white ink.

403: forming a black light-shielding layer above the white light-shielding layer.

In at least one embodiment of the present disclosure, an optical density value of a composite layer constituted by the white light-shielding layer and the black light-shielding layer is greater than four, and the optical density value is represented by the decimal logarithm of a transmittance.

404: forming a touch functional layer within the light-transmissive region of the base substrate.

Advantageous effects of the embodiment of the present disclosure are as follows: by adding the fluorescent agent in the white ink and preparing the white light-shielding layer, to adjust chromaticity of the white light-shielding layer, the fluorescent agent is capable of absorbing invisible ultraviolet light and then emitting blue visible light, which is complementary to yellow light that is originally reflected by the white light-shielding layer, so as to form white light, which therefore ameliorates a phenomenon that a white portion of the frame of the touch display screen is visually yellowish and improves a product yield.

Although the above embodiments are illustrated with the OGS touch screen as an example, yet, the embodiments of the present disclosure are not limited to the OGS touch screen, and can also be used in a touch panel or a touch screen of any other type, which needs a white frame region, for example, an in-cell or an on-cell touch panel or touch screen.

The foregoing embodiments merely are exemplary embodiments of the present disclosure, and not intended to define the scope of the present disclosure, and the scope of the disclosure is determined by the appended claims.

The present application claims priority of Chinese Patent Application No. 201510009696.9 filed on January 8, 2015, the disclosure of which is incorporated herein by reference in its entirety as part of the present application.

## Claims

1. A touch screen, comprising a light-transmissive region and a frame region surrounding the light-transmissive region, a base substrate in the light-transmissive region being provided with a touch functional layer,
wherein the base substrate in the frame region is provided with a white light-shielding layer, the white light-shielding layer is mixed with a fluorescent agent, and the fluorescent agent is capable of absorbing ultraviolet light and emitting blue light.

2. The touch screen according to claim 1, wherein the fluorescent agent is any one of stilbenes fluorescent brightener, coumarin-type fluorescent brightener and naphthalimides fluorescent brightener.

3. The touch screen according to claim 1 or 2, wherein a black light-shielding layer is provided above the white light-shielding layer.

4. The touch screen according to claim 3, wherein an optical density value of a composite layer constituted by the white light-shielding layer and the black light-shielding layer is greater than four, and the optical density value is represented by a decimal logarithm of a transmittance.

5. A touch display screen, comprising the touch screen according to any one of claims 1 to 4.

6. A preparation method of a touch screen, comprising:
forming a white light-shielding layer within a frame region of a base substrate, the white light-shielding layer being mixed with a fluorescent agent, the fluorescent agent being capable of absorbing ultraviolet light and emitting blue light; and
forming a touch functional layer within a light-transmissive region of the base substrate.

7. The method according to claim 6, wherein forming of the white light-shielding layer within the frame region of the base substrate, comprises:
providing a white photoresist, the white photoresist having the fluorescent agent added therein; and
forming a white photoresist film on the base substrate by using the white photoresist, and making the white photoresist film form the white light-shielding layer located on the base substrate in the frame region by a photoetching process.

8. The method according to claim 7, wherein a percentage of mass of the added fluorescent agent to a total mass of the white photoresist and the fluorescent agent is 1‰ to 5‰.

9. The method according to claim 6, wherein forming of the white light-shielding layer mixed with the fluorescent agent within the frame region of the base substrate, comprises:
providing white ink, the white ink having the fluorescent agent added therein; and
forming the white light-shielding layer on the base substrate in the frame region by a silk-screen printing process, by using the white ink.

10. The method according to claim 9, wherein a percentage of mass of the added fluorescent agent to a total mass of the white ink and the fluorescent agent is 1‰ to 5‰.

11. The method according to any one of claims 6 to 10, wherein the fluorescent agent is any one of stilbenes fluorescent brightener, comnarin-type fluorescent brightener and naphthalimides fluorescent brightener.
